# EUROPÄISCHE PATENTSCHRIFT

(11) **EP 3 414 042 B1**
(45) Veröffentlichungstag und Bekanntmachung des Hinweises auf die Patenterteilung: **05.07.2023**
(21) Anmeldenummer: 17704741.2
(22) Anmeldetag: 10.02.2017
(51) Int. Cl.: B23K 26/04, B23K 26/044, B23K 9/127, B23K 31/12

(54) **VERFAHREN UND VORRICHTUNG ZUR ÜBERWACHUNG EINER FÜGENAHT BEIM FÜGEN MITTELS LASERSTRAHLUNG**
METHOD AND DEVICE FOR MONITORING A JOINING SEAM DURING JOINING BY MEANS OF A LASER BEAM
PROCÉDÉ ET DISPOSITIF POUR CONTRÔLER UN JOINT D'ASSEMBLAGE LORS DE L'ASSEMBLAGE AU MOYEN D'UN FAISCEAU LASER

(30) Priorität: 12.02.2016 DE 102016102492
(43) Veröffentlichungstag der Anmeldung: 19.12.2018
(73) Patentinhaber: Precitec GmbH & Co. KG, 76571 Gaggenau-Bad Rotenfels (DE)
(72) Erfinder: SCHWARZ, Joachim, 8451 Kleinandelfingen (CH); BIRMANNS, Stefan, 5462 Rheingau (CH)
(74) Vertreter: Ter Meer Steinmeister & Partner
(86) Internationale Anmeldenummer: PCT/EP2017/052985
(87) Internationale Veröffentlichungsnummer: WO 2017/137550

(56) Entgegenhaltungen:
- EP-A1- 2 062 674
- EP-A1- 2 567 773
- DE-A1-102007 030 395

## Beschreibung

Die Erfindung betrifft ein Verfahren und eine Vorrichtung zur Überwachung einer Fügenaht, insbesondere beim Fügen mittels Laserstrahlung zur Qualitätssicherung.

Bei Fügeprozessen, insbesondere beim Laserschweißen oder -löten ist die 100%ige Inspektion und Vermessung der beim Fügen entstehenden Fügenaht, also der Nahtraupe, vor allem bei der vollautomatischen Fertigung, erforderlich.

Die Inspektion der Schweißnaht wird gewöhnlich "offline" in nachgelagerten Inspektionszellen mit Sensorsystemen durchgeführt, welche ausschließlich dem Zweck der Inspektion der Fügenaht, insbesondere der Schweiß- oder Lötnaht dienen.

Mit dem Nahtinspektionssystem SOUVIS^{®} 5000 der Firma Precitec GmbH & Co. KG lassen sich Schweiß- und Lötnähte vollautomatisch überwachen. Dazu werden zwei zueinander parallele Lichtlinien als Triangulationslinien quer zur Naht schräg auf diese projiziert und von einer Kamera im Wesentlichen senkrecht zur Naht beobachtet. Außerdem wird gleichzeitig ein hoch aufgelöstes Graubild der Naht aufgenommen. Über geometrische Änderungen entlang der Triangulationslinien, über Helligkeitsänderungen der Triangulationslinien und über Helligkeitsunterschiede im Graubild werden die Nahtränder bestimmt. Ferner wird auch das Graubild ausgewertet. So lassen sich kleinste Fehlstellen wie Poren und Schmelzbadauswürfe detektieren.

Aus der DE 2011 012 729 A1 ist ein weiteres optisches offline Prüfverfahren bekannt, bei dem eine Lasertriangulationslinie unter Berücksichtigung ihres Intensitätsverlaufs zur Fehlererkennung und Qualitätsüberwachung ausgewertet wird.

Mit dem Schweißprozess nachgelagerten Systemen kann allerdings nur noch die Schweiß- oder Lötnaht inspiziert werden, die exakte Lage der Naht zur Fügestelle, also zu der zu fügenden Stelle vor dem Fügen und Informationen über die Fügestelle und den Schweißprozess fehlen. Die Vermessung der Fügestelle und der Schweißnaht oder Lötnaht auf alle geometrischen Merkmale, die Untersuchung auf Störstellen der Oberfläche (z.B. offene Poren, Löcher) und die Untersuchung auf interne Störstellen (z.B. schlechte Anbindung, fehlende Einschweißstiefe) sollten jedoch nach Möglichkeit während des Fügeprozesses, also währen des Schweißens oder Lötens stattfinden.

Aus der WO 03/041902 A1 sind ein Verfahren und eine Vorrichtung zur Bewertung von Fügestellen und Werkstücken bekannt. Hier wird vor und hinter dem Füge- oder Schweißprozess jeweils eine Laserlichtlinie quer zu einer Fügelinie bzw. Fügenaht auf das Werkstück projiziert und von einer Kamera beobachtet. Gleichzeitig wird ein Graubild aufgenommen. Im Vorlauf wird der Verlauf der Fügelinie aus Laserlichtlinie und Graubild bestimmt. Zur Inspektion der Schweißnaht werden das Graubild und das Bild der Laserlichtlinie im Nachlauf ausgewertet.

Aus der WO 2008/028580 A1 sind ein Verfahren und eine Vorrichtung zur optischen Beurteilung der Schweißqualität beim Schweißen bekannt. Hier werden mittels einer Kamera aufgenommene Bilder vom Prozess und einer nachgelagerten Triangulationslinie, also einer quer zur Schweißnaht verlaufenden Lichtlinie zur Beurteilung der Qualität der Schweißnaht herangezogen.

Aus der WO 2007/053973 A1 sind ein weiteres Verfahren und eine weitere Vorrichtung zur Bewertung von Fügestellen bekannt. Hier wird zur Bewertung der Lage und Qualität der Fügenaht ein kombiniertes Bild der Fügenaht mit einem Lichtschnittmuster und ein Graubild im selben Sensor, aber in zwei verschiedenen Bereichen aufgenommen. Dabei können Triangulationslinien- und Graubildauswertung mit einem Sensor schnell durchgeführt werden, um aus der Triangulationslinie (Lichtschnittmuster) die Lage und aus dem Graubild die Qualität der Schweiß- oder Fügenaht zu bestimmen.

Aus der DE 10 2011 104 550 B4 ist eine optische Messvorrichtung zur Überwachung einer Fügenaht, ein Fügekopf und Laserschweißkopf mit der selben bekannt. Hier wird eine Triangulationslichtlinie hinter einem Fügebereich auf dem Werkstück erzeugt, die die Fügenaht schneidet und die von einer Kamera erfasst wird. Eine zweite Kamera nimmt ein Bild der Fügenaht selbst auf. Die Optische Messvorrichtung erlaubt es, gleichzeitig eine schnelle 3D Vermessung der Fügenaht durchzuführen und kleine lokale Fehlstellen zu erkennen.

Die DE 10 2010 011 253 B4 beschreibt einen Laserbearbeitungskopf mit einer Lichtschnittvorrichtung, die eine Lichtlinie auf eine Fügelinie vor einem Fügebereich projiziert, und mit einer Kamera, die die Lichtlinie und den Fügebereich, also ein von der Laserstrahlung erzeugtes Schweißbad beobachtet. Hier wird die im Lichtschnittverfahren ermittelte Lage der Fügelinie als Zieltrajektorie gespeichert und mit der Lage des zugehörigen Schweißbadmittelpunkts verglichen, um den Laserbearbeitungsprozess zu steuern.

Die WO2005/095043 A1 beschreibt einen Laserfügekopf and Laserfügeverfahren, bei dem die Vermessung der Fügestelle zur Nahtverfolgung und die Vermessung der Nahtraupe zur Qualitätsüberwachung mittels zweier Sensoren in einem Fügekopf im Vorlauf und im Nachlauf erfolgt.

Aus der DE 10 2011 078 276 B3 ist ein Verfahren zur Erkennung von Fehlern während eines Laserbearbeitungsprozesses sowie eine Laserbearbeitungsvorrichtung bekannt, bei dem werkstückseitig emittierte und/oder reflektierte Strahlung in spezifischen Wellenlängen zur ortsaufgelösten Auswertung erfasst wird, um Fügestellen-Tracking oder Nahtverfolgung und Fehlererkennung zu ermöglichen.

Aus der EP 2 062 674 A1 ist ferner ein Verfahren zum Vorbereiten und Durchführen eines Laserschweißprozesses bekannt, bei dem die Fügelinie im Vorlauf und die Fügenaht im Nachlauf mittels Lichtschnittverfahren beobachtet werden, während der Bearbeitungsbereich selbst aufgrund der von diesem emittierten oder reflektierten Strahlung erfasst wird. Aufgrund der ermittelten Lagen der Fügelinie, des Bearbeitungsbereichs und der Fügenaht wird der Laserschweißprozess gesteuert.

Aus der EP 2 567 773 A1, welche die Grundlage für den Oberbegriff der Ansprüche 1 und 9 bildet, ist ein Verfahren zum Überprüfen der Nahtqualität während eines Laserschweißprozesses bekannt, bei dem zwei Laserlichtlinien vor beziehungsweise hinter dem Brennfleck von einer CMOS-Kamera sowie der Bearbeitungsbereich und das Schmelzbad von einer InGaAs-Kamera überwacht werden.

Die Lage des Fügestoßes kann dabei zum Beispiel mithilfe des Lichtschnitts vor dem Laserbrennfleck ermittelt werden, während die Lage und Form der gebildeten Naht, insbesondere die Wölbung beziehungsweise die Geometrie der Nahtoberraupe mithilfe des Lichtschnitts hinter dem Laserbrennfleck detektiert werden kann. Eine kombinierte Auswertung der Messergebnisse dient dazu gleichzeitig mehrere Nahtcharakteristika zur Qualitätssicherung zu nutzen.

Die DE 10 2006 004 919 A1 betrifft einen Laserschweißkopf mit einem ersten Linienprojektor, der eine Laserlinie im Winkel zur Beobachtungsachse von Bildverarbeitungsmitteln lateral zur Schweißnaht in eine im Vorlauf liegende Messposition projiziert. Diese Lichtschnittlinie wird zur Nahtverfolgung benutzt. Zur Kontrolle der erzeugten Schweißnaht ist ein weiterer Linienprojektor vorgesehen, der eine Laserlinie auf die Schweißnaht lateral zur Schweißrichtung an einer zweiten Messposition projiziert.

Aus der DE 10 2009 042 986 B3 ist es bekannt, sowohl im Vorlauf als auch im Nachlauf eine Lichtlinie quer zum Nahtverlauf über eine zu fügende Stelle beziehungsweise über eine gefügte Stelle, also über eine Fügenaht zu legen, um die Geometrie der zu fügenden Stelle sowie die Geometrie der gefügten Stelle zu erfassen. Die Geometrie der zu fügenden Stelle und die Geometrie der gefügten Stelle können dann miteinander verglichen werden, so dass die Geometrie der Fügenaht, also der Schweißnaht, unabhängig von der Geometrie der zu fügenden Stelle bestimmbar ist.

Laserbearbeitungs- oder -schweißköpfe mit Kameratechnik und Optik erlauben beim Schweißen mit einer dem Schweißprozess vorlaufenden Beleuchtungsvorrichtung die Fügeposition zu detektieren. Mit einer dem Schweißprozess nachgelagerten Beleuchtungsvorrichtung kann die Schweißnaht anhand der entstandenen Nahtraupe geometrisch vermessen und auf Fehlstellen untersucht werden. Für die Inspektion und Vermessung der Nahtraupe sind jedoch die exakte Position der Nahtraupe, also insbesondere deren Mittenposition, und deren Randpunkte entscheidend.

Werden die Randpunkte der Naht falsch bestimmt, wird die anschließende Nahtbreitenberechnung auch falsch. Die Nahtober- oder Unterwölbung, welche ausgehend von der Verbindungsgeraden der Endpunkte zur Nahtraupe berechnet wird, wird ebenfalls falsch. Liegen die ermittelten Endpunkte der Naht zu weit in der eigentlichen Naht oder auf dem Blech neben der Naht, so werden alle Berechnungen der geometrischen Daten falsch. Diese Punkte müssen deshalb möglichst exakt bestimmt werden, um zu zuverlässigen Überwachungs- und Inspektionsergebnissen zu kommen. Absolute Messwerte können zudem nur berechnet werden, falls die Werkstücklage zum Sensor bekannt ist. Insbesondere ist die Erkennung kleiner Fehlstellen in der Naht schwierig, wenn nur die Nahtraupe allein nach dem Lichtschnittverfahren aufgrund einer Triangulationslinie im Nachlauf beurteilt wird.

Um eine Qualitätsaussage bezüglich der Schweißnaht robust zu gestalten, um also eine hohe Erkennungsrate bei kleinen Defekten bei gleichzeitig wenigen Pseudofehlern zu garantieren reicht die Vermessung der Nahtraupe allein nicht aus, da z.B. ein kleiner Versatz der ermittelten Nahtraupe zur tatsächlichen Fügeposition schon eine schlechte Anbindung ergeben kann.

Davon ausgehend liegt der Erfindung die Aufgabe zugrunde, ein Verfahren und eine Vorrichtung zur Überwachung einer Fügenaht, insbesondere beim Fügen mittels Laserstrahlung bereit zustellen, bei dem die Ränder der Fügenaht oder Nahtraupe zuverlässig erkannt werden, so dass die Qualität der Fügenaht sicher beurteilt werden kann.

Diese Aufgabe wird durch das Verfahren nach Anspruch 1 und die Vorrichtung nach Anspruch 9 gelöst. Vorteilhafte Weiterbildungen und Ausgestaltungen der Erfindung sind in den jeweiligen Unteransprüchen beschrieben.

Erfindungsgemäß wird also bei einem Verfahren zum Überwachen einer Fügenaht in Bearbeitungsrichtung vor einem Bearbeitungspunkt eine Fügestelle oder -linie vermessen, um deren Position und Geometrie zu erfassen, aus der Position der Fügestelle wird dann zumindest eine Position einer Fügenaht ermittelt, und in Bearbeitungsrichtung hinter dem Bearbeitungspunkt wird die Fügenaht vermessen, um deren Geometrie an der ermittelten Position zu erfassen.

Hier wird also aus einer Positionsbestimmung im Vorlauf, die die Lage einer Fügestelle entlang eines Fügeweges und seitlich dazu erfasst, die Position einer gefügten Stelle nicht nur entlang des Fügeweges, sondern auch seitlich dazu bestimmt. Damit ist bekannt, wie und wo die gefügte Stelle, also die Fügenaht, lateral oder quer zum Fügeweg, also quer zur Nahtlängsrichtung liegt. Es wird also nicht wie beim Stand der Technik versucht, aus dem Lichtschnitt, der im Nachlauf aufgenommen wird, also aus der Geometrie des Lichtschnittes selbst die Lage des Fügenaht zu ermitteln, sondern es wird umgekehrt die seitliche Lage der Fügenaht zumindest aus der im Vorlauf ermittelten Position bestimmt, um dann aus dem Verlauf des Lichtschnittes in dem Bereich, der der Fügestelle vor der Bearbeitung entspricht, die Geometrie der Fügenaht, also der Schweißraupe zu bestimmen.

Auf diese Weise wird sichergestellt, dass auch bei einer Nahtraupengeometrie, bei der die Lage der Nahtraupe aus dem Lichtschnittverlauf schwer zu bestimmen ist, die Geometrie der Nahtraupe zuverlässig erkannt werden kann, da die seitliche Lage der Nahtraupe relativ zur Nahtlängsrichtung aus der im Vorlauf erfassten, seitlichen Position der Fügestelle bestimmt wird. Insbesondere lässt sich damit auch bei einer Nahtraupengeometrie, bei der die Blechoberfläche flach in die Nahtraupe übergeht, der Rand der Nahtraupe zuverlässig bestimmen. Somit lässt sich also auch bei schwer erkennbaren Abmessungen der Fügenaht oder Fügeraupe eine zuverlässige Erfassung der Geometrie der Fügenaht erhalten, die für eine sichere Bewertung der Schweiß- oder Lötqualität unerlässlich ist.

Bei einer vorteilhaften Ausgestaltung der Erfindung ist vorgesehen, dass auch die Position des Bearbeitungspunktes erfasst wird, und dass die Position der Fügenaht aus der Position sowohl der Fügestelle als auch der Position des Bearbeitungspunktes ermittelt wird. Hierdurch wird die Genauigkeit der Positionsbestimmung weiter verbessert.

Bei einer zweckmäßigen Weiterbildung der Erfindung ist vorgesehen, dass eine Breite der Fügenaht aus einer Breite eines von Laserstrahlung im Laserfokus erzeugten Keyholes oder Schmelzbades ermittelt wird, wobei die Ermittlung der Breite der Fügenaht aus der Breite des von Laserstrahlung im Laserfokus erzeugten Keyholes oder Schmelzbades unter Berücksichtigung von material-, geschwindigkeits- und/oder leistungsabhängigen Parametern erfolgt. Bei quer zur Fügelinie schnell oszillierendem Arbeitslaserstrahl erfolgt die Ermittlung der Breite der Fügenaht unter Berücksichtigung der Amplitude der Laserstrahloszillation. Alternativ zur Vermessung des Keyholes im Bild können theoretische Werte angenommen werden, indem das Keyhole auf der vorlaufender Position angenommen wird und die Größe über die abbildende Optik angenommen wird.

Insbesondere wird dabei die nach Position und Nahtbreite bekannte Fügenaht vermessen, um die Geometrie der Fügenaht zur Qualitätsüberwachung ermitteln. Hierdurch lässt sich der für eine sichere Qualitätsbewertung zu untersuchende Bereich der Werkstückoberfläche noch genauer auf die tatsächliche Fügenaht beschränken.

Bei einer praktischen Ausgestaltung der Erfindung ist vorgesehen, dass zum Vermessen der Fügelinie und der Fügenaht jeweils eine Lichtschnittlinie quer über die Fügelinie bzw. Fügenaht projiziert wird und dass die Bilder der Lichtschnittlinien mittels Bildverarbeitung ausgewertet werden, um die Position und Geometrie der Fügelinie vor der Bearbeitungsstelle und die Position, Breite und Geometrie der Fügenaht hinter der Bearbeitungsstelle zu erfassen.

Insbesondere werden zum Erfassen der Geometrie der Fügenaht die Nahthöhe, Nahtbreite, Nahtfläche, Raupenlängen, Konkavität, Konvexität der Nahtraupe und/oder Aussetzer, nicht geschweißte Löcher und/oder Randkerben vermessen.

Das erfindungsgemäße Verfahren lässt vorteilhafter Weise mit einer Vorrichtung zum Überwachen einer Fügenaht durchführen, die folgendes aufweist: eine erste Lichtschnittvorrichtung zur Erzeugung einer Lichtschnittlinie, die in Bearbeitungsrichtung vor einem Bearbeitungspunkt quer über einer Fügelinie liegt, eine zweite Lichtschnittvorrichtung zur Erzeugung einer Lichtschnittlinie, die in Bearbeitungsrichtung hinter dem Bearbeitungspunkt quer über einer Fügenaht liegt, eine Kamera, die Bilder der beiden Lichtschnittlinien so wie des Bearbeitungspunktes aufnimmt, und eine Bildverarbeitungsvorrichtung, die zum Überwachen der Fügenaht die Geometrie der Fügenaht wie vorstehend beschrieben erfasst.

Zur Überwachung eines Laserfügeprozesses ist ein Laserbearbeitungskopf mit einer Fokussieroptik zum Fokussieren eines Arbeitslaserstrahls auf ein zu schweißendes oder zu lötendes Werkstück ferner mit einer ersten und einer zweiten Lichtschnitteinrichtung zum jeweiligen Projizieren einer Lichtschnittlinie auf eine Fügelinie bzw. Fügenaht im Vorlauf bzw.

Nachlauf eines Bearbeitungspunktes, und mit einer Kamera versehen, die Bilder der beiden Lichtschnittlinien so wie des Bearbeitungspunktes auf der Werkstückoberfläche aufnimmt und diese an eine Bildverarbeitungsvorrichtung ausgibt, die zum Überwachen der Fügenaht die Geometrie der Fügenaht wie vorstehend beschrieben erfasst.

Zweckmäßiger Weise beobachtet dabei die Kamera die Werkstückoberfläche durch die Fokussieroptik im Arbeitslaserstrahlengang hindurch.

Die Erfindung wird im Folgenden beispielsweise anhand der Zeichnung näher erläutert. Es zeigen:
Figur 1 eine vereinfachte schematische Darstellung eines Laserbearbeitungskopfes mit einer erfindungsgemäßen Vorrichtung zum Überwachen einer Fügenaht,
Figur 2A ein Bildschirmfoto einer Aufnahme einer auf eine Fügenaht (Nahtraupe) projizierten Lichtschnittlinie (Lichtschnitt),
Figur 2B eine schematische Darstellung der Lichtschnittlinie nach Figur 2A,
Figur 3A einen Lichtschnitt einer Fügenaht (Nahtraupe) mit einem flachen, schwer detektierbaren Übergang zwischen Werkstückoberfläche und Naht,
Figur 3B eine schematische Darstellung des Lichtschnitts nach Figur 3A,
Figur 4A ein Bildschirmfoto einer Aufnahme der Lichtschnittlinien im Vor- und Nachlauf sowie eines Keyholes oder Schmelzbades im Laserbearbeitungsbereich,
Figur 4B eine schematische Darstellung der Lichtschnitte und des Keyholes oder Schmelzbades nach Figur 4a,
Figur 5a eine schematische Darstellung der Lichtschnitte im Vor- und Nachlauf sowie des Keyholes oder Schmelzbades auf dem Werkstück beim Schweißen einer Kehlnaht, zur Veranschaulichung der Erfassung der Geometriedaten im Vor- und Nachlauf und der Position des Keyholes oder Schmelzbades,
Figur 5b eine schematische Darstellung der Lichtschnitte und des Keyholes gemäß Figur 5a, zur Veranschaulichung der Erfassung der Nahtgeometrie,
Figur 6a eine schematische Darstellung der Lichtschnitte im Vor- und Nachlauf sowie des Keyholes oder Schmelzbades auf dem Werkstück beim Schweißen eines Stumpfstosses, zur Veranschaulichung der Erfassung der Geometriedaten im Vor- und Nachlauf und der Position des Keyholes oder Schmelzbades,
Figur 6b eine schematische Darstellung der Lichtschnitte und des Keyholes gemäß Figur 6a, zur Veranschaulichung der Erfassung der Nahtgeometrie, und
Figur 6c eine schematische Darstellung der Lichtschnitte und des Keyholes gemäß Figur 6a, zur Veranschaulichung der Erfassung der Position des Keyholes oder Schmelzbades bei oszillierendem Arbeitslaserstrahl.

In den verschiedenen Figuren der Zeichnung werden einander entsprechende Bauteile und Elemente mit gleichen Bezugszeichen versehen.

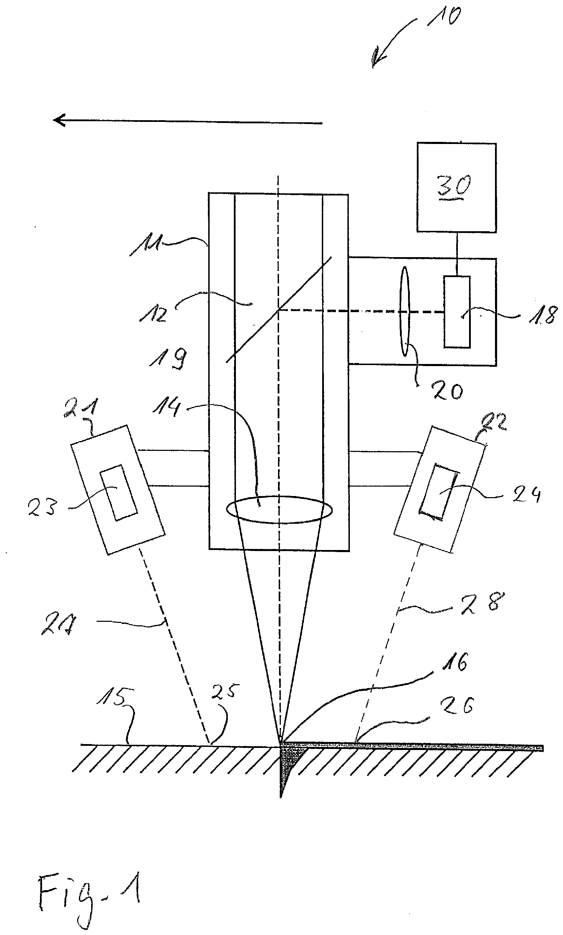

Wie in Figur 1 gezeigt, weist ein Laserbearbeitungskopf 10 ein Gehäuse 11 auf, durch das ein Bearbeitungslaserstrahl 12 geführt ist, der von einer Fokussierlinse 14 auf ein Werkstück 15 fokussiert wird. Der Brennpunkt oder Fokus 16 liegt dabei auf der Werkstückoberfläche oder in einem bestimmten Abstand dicht darüber oder darunter, je nach den Erfordernissen der gewünschten Schweißung und schmilzt das Werkstückmaterial zum Verschwei-ßen zweier Bleche oder dergleichen auf. Dabei bildet sich im Bereich des Laserfokus 16, also des sogenannten Tool center point (TCP) üblicherweise eine Dampfkapillare aus, die auch als Keyhole bezeichnet wird und die im Zentrum des Bearbeitungsbereichs liegt. Zur Beobachtung des Keyholes oder Schmelzbades ist eine Kamera 18 vorgesehen, die Prozessstrahlung, Rückreflexe und anderes, an der Werkstückoberfläche reflektiertes Licht über die Fokussierlinse 14, einen im Arbeitsstrahlengang angeordnete teildurchlässigen Spiegel 19 und ein Kameraobjektiv 20 zur Beobachtung der Werkstückoberfläche empfängt. Der teildurchlässige Spiegel 19 ist für die Arbeitslaserstrahlung im Wesentlichen durchlässig, während er für andere Wellenlängenbereiche reflektierend ist.

Um die Oberflächengeometrie des Werkstücks, die Position der Fügelinie im Vorlauf, also in Bearbeitungsrichtung vor dem TCP und die Position und Geometrie der Fügenaht oder Nahtraupe im Nachlauf, also in Bearbeitungsrichtung hinter dem TCP erfassen zu können, sind eine erste und eine zweite Lichtschnittvorrichtung 21, 22 vorgesehen, deren jeweilige Laserlichtquelle 23, 24 eine Laserlichtlinie projiziert, die im Folgenden als Lichtschnittlinie 25, 26 oder auch einfach als Lichtschnitt bezeichnet wird. Um die Lichtschnittlinien 25, 26 im Vorlauf bzw. Nachlauf zu erzeugen, senden die Laserlichtquellen 23, 24 einen Laserstrahl 27, 28 aus, der entweder in nicht näher dargestellter Weise fächerförmig ausgebildet ist, oder der die Oberfläche des Werkstücks quer zur Fügelinie bzw. Fügenaht mit hoher Geschwindigkeit abtastet.

Die von der Kamera 18 aufgenommenen Bilder werden an eine Bildverarbeitungsvorrichtung 30 geliefert, die aus der Lichtschnittlinie 25 im Vorlauf die Lage oder Position der Fügelinie, einen Kantenversatz und einen Spalt zwischen den zu verschweißenden Werkstücken, zum Beispiel zwischen zwei Blechen, vermisst. Aus der Lichtschnittlinie 26 im Nachlauf werden Form und Position der Fügenaht oder Nahtraupe erfasst. Dabei werden insbesondere die Nahthöhe, die Nahtbreite, die Nahtfläche, die Länge der Nahtraupenoberfläche in Querrichtung der Naht, die Konkavität oder Konvexität der Naht erfasst, um dabei auch Aussetzer und Löcher in der Naht sowie Randkerben zu ermitteln.

Zur Bestimmung der Lage oder Position des Keyholes oder TCPs wird die aus dem Wechselwirkungsbereich zwischen Arbeitslaserstrahl 12 und Werkstück 15 zurück reflektierte Arbeitslaserstrahlung und/oder Prozesslicht von der Kamera 18 aufgenommen.

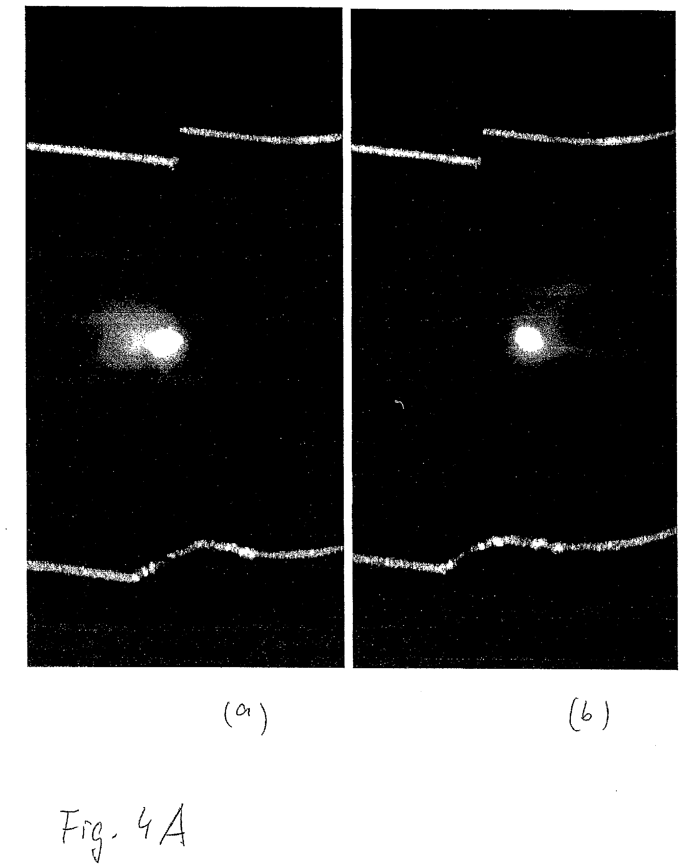

Ein Bild, wie es die Kamera sieht, ist in Figur 4A gezeigt. Die Position der Fügelinie im Vorlauf wird dazu genutzt, den Laserfokus 16 auf die Fügelinie nachzuführen, wenn der Laserfokus 16 den Punkt der Fügelinie erreicht, dessen Position zur Nachführung verwendet werden soll. Hierbei ist der Abstand der Lichtschnittlinie 25 vor dem Laserfokus 16 zum Laserfokus 16 und die Vorschubgeschwindigkeit, mit der der Laserbearbeitungskopf 10 entlang der Fügelinie geführt wird, zu berücksichtigen. Die Vorschubgeschwindigkeit wird dabei vorzugsweise aus einer nicht näher dargestellten Maschinensteuerung, die die Bewegung des Laserbearbeitungskopf 10 steuert, ausgelesen.

Aus den Abständen zwischen den Lichtschnittlinien 25, 26 und dem Laserfokus 16 kann auch auf den Abstand zwischen dem Laserbearbeitungskopf 10 und Werkstück 15 geschlossen werden, da sich die Abstände zwischen den Lichtschnittlinien 25, 26 und dem Laserfokus 16 vergrößern, wenn sich der Laserbearbeitungskopf 10 dem Werkstück 15 nähert, während sich die Abstände verkleinern, wenn der Laserbearbeitungskopf 10 sich von dem Werkstück 15 entfernt. Aus den Winkeln der Lichtschnittlinien zueinander und aus deren genereller Form lassen sich die Werkstückoberflächenfonn und ggf. auch eine Verkippung des Laserbearbeitungskopfes 10 gegenüber einer Senkrechten zur Werkstückoberfläche erfassen.

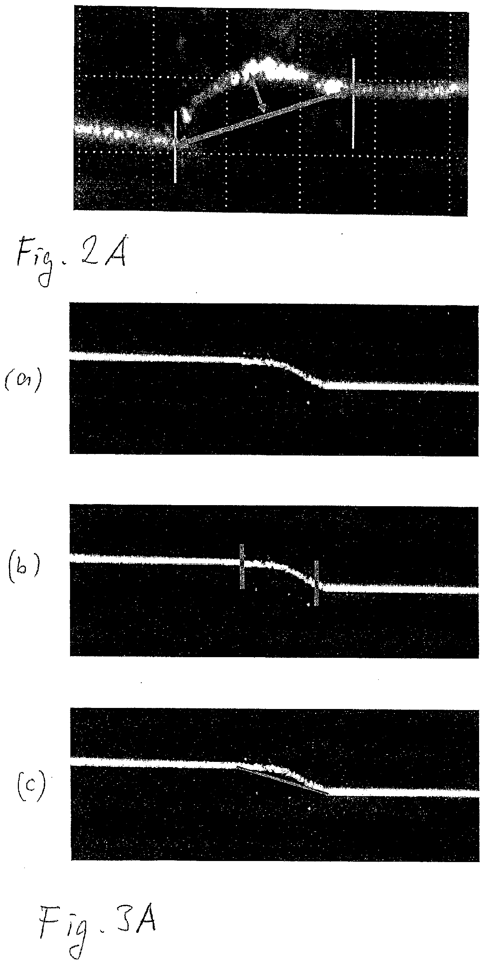

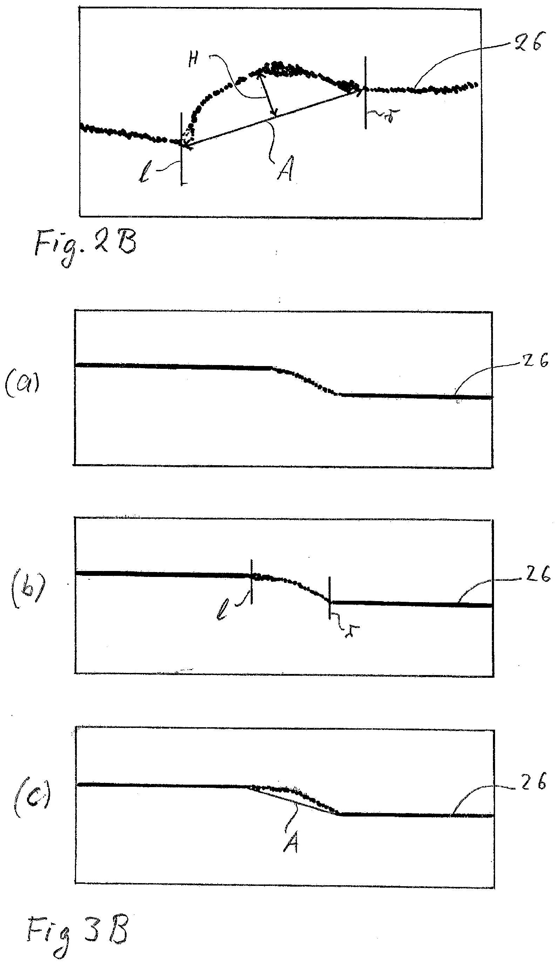

Figuren 2A und 2B zeigen ein Beispiel einer Lichtschnittlinie 26, die auf eine konvexe Nahtraupe projiziert ist.

Der bogenförmige Bereich der Lichtschnittlinie 26 stellt die Oberfläche der Nahtraupe dar, deren Ränder durch die senkrechten Linien 1 und r markiert sind. Der Abstand A zwischen den Schnittpunkten der Linien 1 und r mit der Lichtlinie 26, also die euklidische Distanz zwischen linken und rechten Randpunkt stellt die Breite der Naht dar, während die Nahthöhe H der Nahtraupe durch den Abstand zwischen der Verbindungslinie A und dem bogenförmigen Bereich der Lichtschnittlinie 26 gegeben ist. Die Länge der Nahtraupe ist dabei durch die Länge der Lichtlinie 26 zwischen den Markierungslinien 1, r gegeben.

Die Figuren 3A und 3B zeigen ein Beispiel für eine Lichtschnittlinie 26 im Nachlauf, bei der die Oberfläche des linken Werkstücks flach in den Nahtbereich übergeht, so dass der linke Rand der Nahtraupe schwer zu detektieren ist. In den Figuren 3A (b), (c) und 3B (b), (c) sind die Ränder der Nahtraupe durch die Linien 1, r markiert bzw. ist die Breite der Naht durch den Abstand A veranschaulicht.

Figur 4A (a) und (b) zeigt ein Bildschirmfoto des Kamerabildes, also des Bildes, das die Kamera 18 von der Werkstückoberfläche aufnimmt. Die obere Lichtschnittlinie 25 stellt den Lichtschnitt im Vorlauf dar, wobei der Kantenversatz und der Spalt zwischen den Werkstücken als Lücke 30 zu erkennen ist. Aus dieser Lücke 30 wird die Position der Fügelinie im Vorlauf bestimmt. In der Mitte des Bildes ist der Wechselwirkungsbereich zwischen Arbeitslaserstrahl 12 und Werkstück 15, insbesondere das Keyhole bzw. das vom Arbeitslaserstrahl erzeugte Schmelzbad als Spot 31 zu erkennen. Aus der Lage des Spots 31 kann die Position des TCP ermittelt werden, die dem Zentrum des Spots 31, also dem Zentrum des Keyholes bzw. des Schmelzbad entspricht.

Die untere Lichtschnittlinie 26 stellt den Lichtschnitt im Nachlauf dar, aus dem die einzelnen Parameter der Nahtraupe ermittelt werden, die zur Bestimmung der Qualität der Schweißung erforderlich sind.

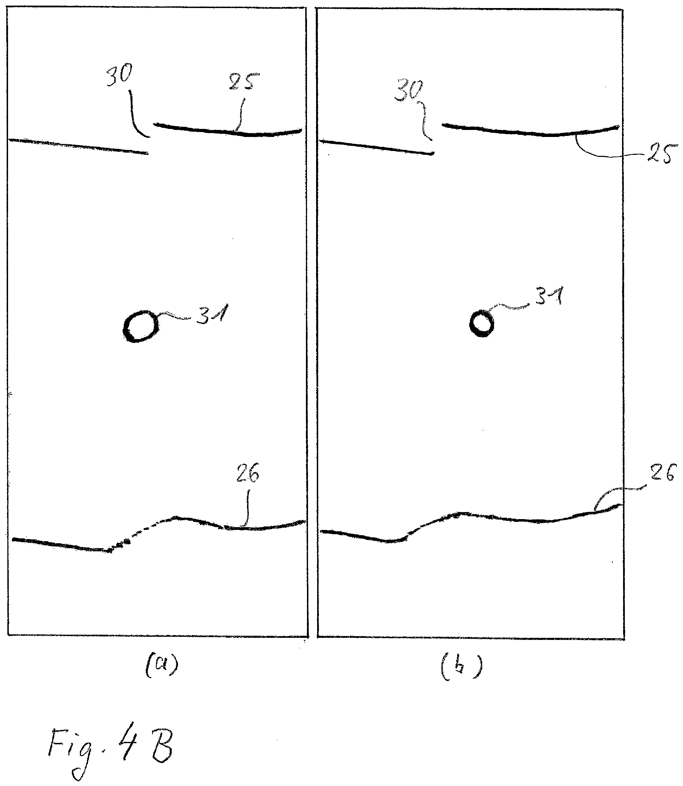

In Figur 4A (a) und Figur B (a) ist der Spot 31, der ein Bild des Keyholes bzw. des Schmelzbad darstellt, nach links ausgelenkt, während in der Figur 4A, B (b) das Keyhole bzw. des Schmelzbad nach rechts ausgelenkt ist.

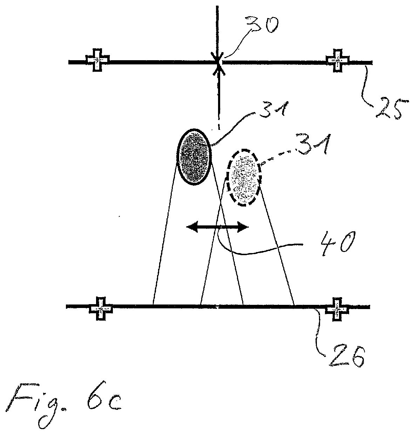

Bei einem Laserbearbeitungskopf, insbesondere Schweisskopf mit schnell oszillierendem Laserstrahl oszilliert das Keyhole ebenfalls schnell quer zur Fügestelle. In die Nahtbreite geht hier zusätzlich zur Breite des Spots die Amplitude der Oszillation ein, wie unten anhand von Figur 6c näher erläutert wird.

Figur 4 zeigt also Bilder von drei Bereichen der Werkstückoberfläche, die zur selben Zeit aufgenommen wurden.

Um die Lage der Fügelinie im Vorlauf, die durch die Lücke 30 in der Lichtschnittlinie 25 dargestellt wird, für das Nachführen des Laserfokus 16 zu nutzen, ist die Zeit zu berücksichtigen, die der TCP benötigt, um von seiner in Figur 4 in der Mitte dargestellten Position, die der Lage des Spots 31 entspricht, zu der jeweils gemessenen Position der Fügelinie im Vorlauf zu gelangen. Soll die Position der Fügelinie im Vorlauf und/oder die Position des Tool Center Points oder Laserfokus 16, die aus dem Spot 31 ermittelt wird, für die Bestimmung der Nahtmittenposition, also die Lage der Nahtmitte quer zur Längsrichtung der Fügelinie und/oder der Nahtbreite genutzt werden, wie unten näher erläutert wird, so muss ebenfalls die Zeit berücksichtigt werden, die die Lichtschnittlinie 26 im Nachlauf benötigt, um zu der Position zu gelangen, in der die Lage des Keyholes aus dem Spot 31 ermittelt wurde. Die Zeitverzögerung ergibt sich dabei aus dem Abstand zwischen Tool Center Point und Lichtschnitt und der jeweiligen Vorschubgeschwindigkeit, die konstant oder variabel sein kann.

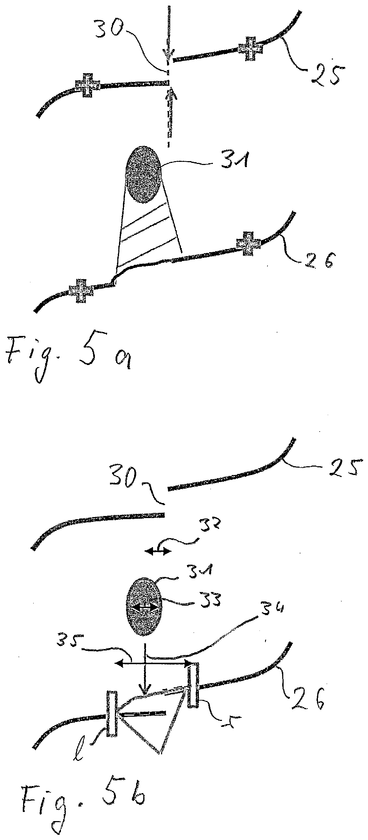

Wie in Figur 5A dargestellt ist, wird aus der Geometrie der Lichtschnittlinie 25 im Vorlauf die Fügeposition, also die Position oder Lage der Fügelinie, der Spalt zwischen den Werkstücken und der Kantenversatz aus der Position und Geometrie der Lücke 30 ermittelt. Außerdem werden 3D Punkte der Werkstückoberfläche erfasst, die in der Zeichnung als Kreuze angedeutet sind. Aus dem Spot 31 wird die Lage und die Größe des Keyholes oder Schmelzbads ermittelt. Schließlich wird aus der Lichtschnittlinie 26 wiederum die Geometrie der Werkstückoberfläche und insbesondere die Geometrie der Nahtraupe im Nachlauf ermittelt. Ferner werden wieder 3D Punkte der Blech- oder Werkstückgeometrie im Raum erfasst, die auch als Kreuze angedeutet sind.

Wie in Figur 5B dargestellt ist, ergibt sich aus der Fügeposition, die aus der Lage der Lücke 30 ermittelt wird, und dem Versatz zwischen der Fügeposition und der Position des später aufgenommenen Spots 31 die Lage der Nahtraupe quer zur Fügelinie, wie durch den Pfeil 34 angedeutet ist. Die Breite der Nahtraupe, die durch den Pfeil 35 angedeutet ist, ergibt sich aus der Breite des Spots 31, die durch den Doppelpfeil 33 angedeutet ist, und einem weiteren Faktor, der von der Vorschubgeschwindigkeit, dem Material der Werkstücke, der Leistung des Arbeitslaserstrahls sowie von der Geometrie der Werkstückoberfläche im Vorlauf abhängt.

Aus der lateralen Lage der Nahtraupe und aus deren Breite, die aus der im Vorlauf gemessenen Position der Fügestelle und/oder der Lage und Größe des Spots ermittelt wurde, ergibt sich dann der Bereich in der aufgenommenen Lichtschnittlinie 26, der zur Qualitätsüberwachung der Schweißung zu untersuchen ist, um die Nahtgeometrie sowie Aussetzer, Löcher und Randkerben zu erfassen.

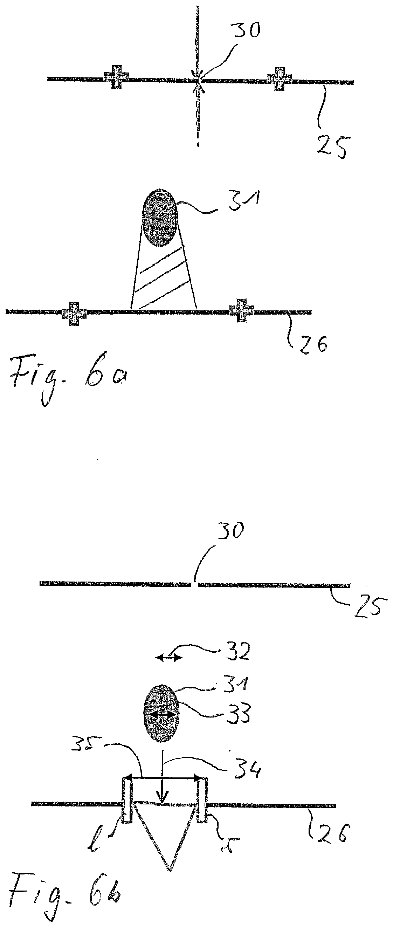

Während die Figuren 5A und 5B die Situation bei einer Kehlnahtschweißung darstellen, zeigen die Figuren 6A und 6B die entsprechenden Elemente bei der Schweißung einer Stoßnaht, also bei der Schweißung einer Naht bei der sich die beiden Werkstücke oder Bleche mit ihren Kanten unmittelbar ohne Versatz gegeneinander gegenüber stehen.

Die Nahtbreite und die Nahtposition werden bei einer Stoßnahtschweißung in der gleichen Weise ermittelt, wie anhand von Figur 5A und 5B für die Schweißung einer Kehlnaht beschrieben wurde.

Wird zum Schweißen ein Arbeitslaserstrahl eingesetzt, der schnell quer zur Fügelinie oszilliert, so oszilliert das Keyhole ebenfalls schnell quer zur Fügestelle. Wie in Figur 6c für die Situation beim Stumpfstoßschweißen mit oszillierendem Arbeitslaserstrahl angedeutet ist variiert die Position des Spots 31, also die Position des Keyholes oder Schmelzbades entsprechend der Amplitude der Laserstrahlauslenkung. Die entsprechende Auslenkung des Spots 31 ist in Figur 6c durch den Doppelpfeil 40 veranschaulicht. In die Nahtbreite geht hier zusätzlich zur Breite des Spots 31 die Amplitude der Oszillation ein.

Die Ermittlung der Position (Nahtmittenposition) und der Breite der Fügenaht aus der Position der Fügelinie im Vorlauf, dem Versatz zwischen der Position der Fügelinie im Vorlauf und dem Keyhole, also dem Spot 31, und aus der Position des Keyholes und der Keyhole- oder Spotbreite ist besonders wichtig, da im Idealfall die Lichtschnittlinie 26 im Nachlauf keinerlei Unterbrechung oder Abweichung aufweist, da die Fügenaht dann eine Oberfläche aufweist, die mit beiden zu verschweißenden Werkstücken ideal fluchtet. Durch die Überprüfung des Bereichs der Lichtlinie 26 im Nachlauf, der durch die Messungen im Vorlauf und Bearbeitungsbereich ermittelt wurde, lässt sich auch bei einer Stoßnahtschweißung eine zuverlässig Qualitätsüberwachung erzielen.

Neben der Position der Nahtraupe aus Vorlauf, Offset und Keyholeposition, dem Versatz der Nahtraupe zur Fügeposition, also dem TCP, kann auch der Verkippungswinkel über die Lage des Werkstücks im Raum aus den 3D Daten aus Vorlauf und Nachlauf und der Position des Laserbearbeitungskopfes ermittelt werden.

Erfindungsgemäß wird die exakte Bestimmung der Nahtraupenendpunkte im Bildsuchbereich der Lichtschnittlinie im Nachlauf ermöglicht, welche über die aus Vorlauf und Spot (TCP) bestimmt werden. Dadurch ergibt sich die zuverlässige Bestimmung der absoluten Geometriedaten (Unterwölbung, Breite, Konkavität usw.) der Naht. Ferner kann auch noch die Helligkeit der Lichtschnittlinie über der Nahtraupe zur Prüfung von Oberflächendefekten herangezogen werden. Letztlich kann auch noch die Laserleistung gemessen und zur Korrelation mit der Helligkeits- und Geometriedaten verwendet werden um durch Korrelation aller oben beschriebenen Daten eine robuste Qualitätsaussage zu erhalten.

Durch die Korrelation von Fügeposition, Blech- oder Werkstückgeometrie, Geometrie- und Oberflächendaten der Nahtraupe und Laserleistungsdaten ergibt sich somit eine totale und zuverlässige Qualitätsüberwachung des Fügeprozesses.

## Patentansprüche

1. Verfahren zum Überwachen einer Fügenaht entlang eines Fügeweges, insbesondere beim Fügen mittels Laserstrahlung, bei dem:
- in Bearbeitungsrichtung vor einem Bearbeitungspunkt eine Fügestelle vermessen wird, um deren Position und Geometrie zu erfassen,
**dadurch gekennzeichnet, dass**:
- zumindest aus der Position der Fügestelle vor dem Bearbeitungspunkt, die die Lage der Fügestelle entlang des Fügeweges und seitlich dazu umfasst, die Position der Fügenaht hinter dem Bearbeitungspunkt entlang des Fügeweges und seitlich dazu ermittelt wird, und
- in Bearbeitungsrichtung hinter dem Bearbeitungspunkt die Fügenaht an der ermittelten Position vermessen wird, um deren Geometrie zu erfassen.

2. Verfahren nach Anspruch 1, **dadurch gekennzeichnet, dass** die Position des Bearbeitungspunktes erfasst wird und dass die Position der Fügenaht aus der Position der Fügestelle und der Position des Bearbeitungspunktes ermittelt wird.

3. Verfahren nach Anspruch 1 oder 2, **dadurch gekennzeichnet, dass** eine Breite der Fügenaht aus einer Breite eines von Laserstrahlung im Laserfokus (16) erzeugten Keyholes oder Schmelzbades ermittelt wird.

4. Verfahren nach Anspruch 3, **dadurch gekennzeichnet, dass** die Ermittlung der Breite der Fügenaht aus der Breite des von Laserstrahlung im Laserfokus (16) erzeugten Keyholes oder Schmelzbades unter Berücksichtigung von material-, geschwindigkeits- und/oder leistungsabhängigen Parametern erfolgt.

5. Verfahren nach Anspruch 3, **dadurch gekennzeichnet, dass** die Ermittlung der Breite der Fügenaht aus der Breite des von Laserstrahlung im Laserfokus (16) erzeugten Keyholes oder Schmelzbades bei quer zur Fügelinie schnell oszillierendem Arbeitslaserstrahl unter Berücksichtigung der Amplitude der Laserstrahloszillation erfolgt.

6. Verfahren nach Anspruch 3, 4 oder 5, **dadurch gekennzeichnet, dass** die nach Position und Nahtbreite bekannte Fügenaht vermessen wird, um die Geometrie der Fügenaht zur Qualitätsüberwachung ermitteln.

7. Verfahren nach einem der vorstehenden Ansprüche, **dadurch gekennzeichnet, dass** zum Vermessen der Fügelinie und der Fügenaht jeweils eine Lichtschnittlinie (25, 26) quer über die Fügelinie bzw. Fügenaht projiziert wird und dass die Bilder der Lichtschnittlinien (25, 26) mittels Bildverarbeitung ausgewertet werden, um die Position und Geometrie der Fügelinie vor der Bearbeitungsstelle und die Position, Breite und Geometrie der Fügenaht hinter der Bearbeitungsstelle zu erfassen.

8. Verfahren nach Anspruch 6, **dadurch gekennzeichnet, dass** zum Erfassen der Geometrie der Fügenaht die Nahthöhe, Nahtbreite, Nahtfläche, Raupenlängen, Konkavität, Konvexität der Nahtraupe und/oder Aussetzer, nicht geschweißte Löcher und/oder Randkerben vermessen werden.

9. Vorrichtung zum Überwachen einer Fügenaht, insbesondere beim Fügen mittels Laserstrahlung, mit
- einer ersten Lichtschnittvorrichtung (21) zur Erzeugung einer Lichtschnittlinie (25), die in Bearbeitungsrichtung vor einem Bearbeitungspunkt quer über einer Fügelinie liegt,
- einer zweiten Lichtschnittvorrichtung (22) zur Erzeugung einer Lichtschnittlinie (26), die in Bearbeitungsrichtung hinter dem Bearbeitungspunkt quer über einer Fügenaht liegt,
- einer Kamera (18), die Bilder der beiden Lichtschnittlinien (25, 26) sowie des Bearbeitungspunktes aufnimmt, und
- einer Bildverarbeitungsvorrichtung (30), **dadurch gekennzeichnet, dass**
- die Bildverarbeitungsvorrichtung (30) eingerichtet ist, mittels den von der Kamera aufgenommenen Bildern zumindest aus der Position der Fügestelle vor dem Bearbeitungspunkt, die die Lage der Fügestelle entlang des Fügeweges und seitlich dazu umfasst, die Position der Fügenaht hinter dem Bearbeitungspunkt entlang des Fügeweges und seitlich dazu zu ermitteln und in Bearbeitungsrichtung hinter dem Bearbeitungspunkt die Fügenaht an der ermittelten Position zu vermessen, um deren Geometrie zu erfassen.

10. Laserbearbeitungskopf mit einer Fokussieroptik zum Fokussieren eines Arbeitslaserstrahls (12) auf ein zu fügendes Werkstück (15) und mit einer Vorrichtung zum Überwachen einer Fügenaht gemäß Anspruch 9.

11. Laserbearbeitungskopf nach Anspruch 10, **dadurch gekennzeichnet, dass** die Kamera (18) die Werkstückoberfläche durch die Fokussieroptik (14) im Arbeitslaserstrahlengang hindurch beobachtet.

## Claims

1. A method for monitoring a joining seam along a joining path, particularly during joining by means of laser radiation, in which:
- in processing direction in front of a processing point, a joining point is measured in order to detect its position and geometry,
**characterized in that**
- at least from the position of the joining point in front of the processing point, which comprises the position of the joining point along the joining path and laterally thereto, the position of the joining seam behind the processing point along the joining path and laterally thereto is detected, and
- in processing direction behind the processing point, the joining seam is measured at the obtained position in order to detect its geometry.

2. The method according to claim 1, **characterized in that** the position of the processing point is detected and that the position of the joining seam is obtained from the position of the joining point and the position of the processing point.

3. The method according to claim 1 or 2, **characterized in that** a width of the joining seam is obtained from a width of a keyhole or molten bath generated by laser radiation in the laser focus (16).

4. The method according to claim 3, **characterized in that** the obtaining of the width of the joining seam from the width of the keyhole or molten bath generated by laser radiation in the laser focus (16) takes into account parameters which depend on material, speed and/or power.

5. The method according to claim 3, **characterized in that** the obtaining of the width of the joining seam from the width of the keyhole or molten bath generated by laser radiation in the laser focus (16) takes into account the amplitude of the laser beam oscillation with working laser beam rapidly oscillating transversely to the joint line.

6. The method according to claim 3, 4 or 5, **characterized in that** the joining seam defined based on the position and the width is measured in order to obtain the geometry of the joining seam for quality control.

7. The method according to one of the preceding claims, **characterized in that** for measuring the joint line and the joining seam, in each case a light-section line (25, 26) is projected transversely across the joint line or the joining seam and that the images of the light-section lines (25, 26) are evaluated by means of image processing to detect the position and geometry of the joint line in front of the processing point and to detect the position, width and geometry of the joining seam behind the processing point.

8. The method according to claim 6, **characterized in that** the seam height, the seam width, the seam area, the length of the weld bead, the concavity, the convexity of the seam and/or dropouts, non-welded holes and/or edge notches are measured for detecting the geometry of the joining seam.

9. A device for monitoring a joining seam, particularly during joining by means of laser radiation, having
- a first light-section device (21) for generating a light-section line (25) which lies in processing direction transversely across a joint line in front of a processing point,
- a second light-section device (22) for generating a light-section line (26) which lies in processing direction transversely across a joining seam behind the processing point,
- a camera (18) that records images of the two light-section lines (25, 26) as well as of the processing point, and
- an image processing device (30),
**characterized in that**
the image processing device (30) is configured to obtain, by means of the pictures taken by the camera, at least from the position of the joining point in front of the processing point, which comprises the position of the joining point along the joining path and laterally thereto, the position of the joining seam behind the processing point along the joining path and laterally thereto, and to measure, in processing direction behind the processing point, the joining seam at the obtained position in order to detect its geometry.

10. A laser processing head with a focusing optics for focusing a working laser beam (12) onto a workpiece (15) to be joined, and with a device for monitoring a joining seam according to claim 9.

11. The laser processing head according to claim 10, **characterized in that** the camera (18) observes the workpiece surface through the focusing optics (14) in the working laser beam path.

## Revendications

1. Procédé pour surveiller une soudure d'assemblage le long d'un trajet d'assemblage, en particulier lors de l'assemblage au moyen d'un rayonnement laser, dans lequel :
- un emplacement d'assemblage est mesuré dans une direction d'usinage avant un point d'usinage, afin de détecter sa position et sa géométrie,
**caractérisé en ce que** :
- au moins à partir de la position de l'emplacement d'assemblage avant le point d'usinage, qui inclut l'endroit de l'assemblage le long du trajet d'assemblage et latéralement à celui-ci, la position de la soudure d'assemblage est déterminée derrière le point d'usinage le long du trajet d'usinage et latéralement à celui-ci, et
- dans la direction d'usinage derrière le point d'usinage, la soudure d'assemblage est mesurée à la position déterminée afin de détecter sa géométrie.

2. Procédé selon la revendication 1, **caractérisé en ce que** la position du point d'usinage est détectée et **en ce que** la position de la soudure d'assemblage est déterminée à partir de la position de l'emplacement d'assemblage et de la position du point d'usinage.

3. Procédé selon la revendication 1 ou 2, **caractérisé en ce qu'**une largeur de la soudure d'assemblage est déterminée à partir d'une largeur d'un trou de serrure ou d'un bain de fusion généré par le rayonnement laser dans le foyer de laser (16).

4. Procédé selon la revendication 3, **caractérisé en ce que** la largeur de la soudure d'assemblage est déterminée à partir de la largeur du trou de serrure ou du bain de fusion généré par le rayonnement laser dans le foyer de laser (16), en tenant compte de paramètres dépendant du matériau, de la vitesse et/ou de la puissance.

5. Procédé selon la revendication 3, **caractérisé en ce que** la largeur de la soudure d'assemblage est déterminée à partir de la largeur du trou de serrure ou du bain de fusion généré par le rayonnement laser dans le foyer de laser (16) avec un faisceau laser de travail qui oscille rapidement transversalement à la ligne d'assemblage, en tenant compte de l'amplitude de l'oscillation du faisceau laser.

6. Procédé selon la revendication 3, 4 ou 5, **caractérisé en ce que** la soudure d'assemblage, connue d'après la position et la largeur de soudure, est mesurée afin de déterminer la géométrie de la soudure d'assemblage pour contrôler la qualité.

7. Procédé selon l'une des revendications précédentes, **caractérisé en ce que** pour mesurer la ligne d'assemblage et la soudure d'assemblage, une ligne de nappe de lumière (25, 26) est respectivement projetée transversalement à travers la ligne d'assemblage ou la soudure d'assemblage, et **en ce que** les images des lignes de nappe de lumière (25, 26) sont évaluées par un traitement d'image afin de détecter la position et la géométrie de la ligne d'assemblage avant l'emplacement d'usinage ainsi que la position, la largeur et la géométrie de la soudure d'assemblage derrière l'emplacement d'usinage.

8. Procédé selon la revendication 6, **caractérisé en ce que** la hauteur de soudure, la largeur de soudure, la surface de soudure, les longueurs de passe, la concavité, la convexité de la passe de soudure et/ou des interruptions, des trous non soudés et/ou des entailles de bordure sont mesurées afin de détecter la géométrie de la soudure d'assemblage.

9. Dispositif pour surveiller une soudure d'assemblage, en particulier lors de l'assemblage au moyen d'un rayonnement laser, comportant
- un premier dispositif de nappe de lumière (21) pour générer une ligne de nappe de lumière (25) qui se situe dans la direction d'usinage avant un point d'usinage transversalement à travers une ligne d'assemblage,
- un second dispositif de nappe de lumière (22) pour générer une ligne de nappe de lumière (26) qui se situe dans la direction d'usinage derrière le point d'usinage transversalement à travers une soudure d'assemblage,
- une caméra (18) qui enregistre des images des deux lignes de nappe de lumière (25, 26) ainsi que du point d'usinage, et
- un dispositif de traitement d'image (30),
**caractérisé en ce que**
- le dispositif de traitement d'image (30) est configuré pour déterminer, au moyen des images enregistrées par la caméra, au moins à partir de la position de l'emplacement d'assemblage avant le point d'usinage, qui inclut le lieu de l'assemblage le long du trajet d'assemblage et latéralement à celui-ci, la position de la soudure d'assemblage derrière le point d'usinage le long du trajet d'assemblage et latéralement à celui-ci, et pour mesurer dans la direction d'usinage derrière le point d'usinage, la soudure d'assemblage à la position déterminée afin de détecter sa géométrie.

10. Tête d'usinage au laser comportant une optique de focalisation pour focaliser un faisceau laser de travail (12) sur une pièce à assembler (15), et un dispositif pour surveiller une soudure d'assemblage selon la revendication 9.

11. Tête d'usinage au laser selon la revendication 10, **caractérisé en ce que** la caméra (18) observe la surface de la pièce par l'intermédiaire de l'optique de focalisation (14) dans un trajet de faisceau laser de travail.
